(19)

**Europäisches Patentamt**
**European Patent Office**
**Office européen des brevets**

(11) **EP 1 529 384 B1**

(12) **EUROPÄISCHE PATENTSCHRIFT**

(45) Veröffentlichungstag und Bekanntmachung des Hinweises auf die Patenterteilung:
**20.10.2010   Patentblatt 2010/42**

(21) Anmeldenummer: **03790720.1**

(22) Anmeldetag: **14.08.2003**

(51) Int Cl.:
**H04L 12/56** *(2006.01)*

(86) Internationale Anmeldenummer:
**PCT/DE2003/002736**

(87) Internationale Veröffentlichungsnummer:
**WO 2004/021647 (11.03.2004 Gazette 2004/11)**

(54) **ZUGANGSKONTROLLE BEI PAKETORIENTIERTEN NETZEN**

ACCESS CONTROL FOR PACKET-ORIENTED NETWORKS

CONTROLE D'ACCES DANS DES RESEAUX A COMMUTATION PAR PAQUETS

(84) Benannte Vertragsstaaten:
**DE ES FR GB IT**

(30) Priorität: **14.08.2002   DE 10237334**

(43) Veröffentlichungstag der Anmeldung:
**11.05.2005   Patentblatt 2005/19**

(73) Patentinhaber: **Nokia Siemens Networks GmbH & Co. KG**
**81541 München (DE)**

(72) Erfinder: **MENTH, Michael**
**97255 Gelchsheim/Oellingen (DE)**

(56) Entgegenhaltungen:
**WO-A-01/54448**

• **BRESLAU ET AL: "Endpoint Admission Control: Architectural Issues and Performance" PROCEEDINGS OF ACM SIGCOMM, XX, XX, 28. August 2000 (2000-08-28), Seiten 57-69, XP002152149**

**EP 1 529 384 B1**

## Beschreibung

Die Erfindung betrifft ein Verfahren zur Verkehrsbegrenzung in einem paketorientierten Netz.

Derzeit ist die Entwicklung von Technologien für paketbasierte Netze ein zentrales Betätigungsfeld für Ingenieure aus den Gebieten der Netztechnik, der Vermittlungstechnik und der Internet-Technologien.

Dabei steht das Ziel im Vordergrund, möglichst ein paketorientiertes Netz für beliebige Dienste verwenden zu können. Traditionell werden über paketorientierte Netze zeitunkritische Datenübertragungen vorgenommen, wie z.B. der Transfer von Dateien oder elektronischer Mail. Sprachübertragung mit Echtzeitanforderungen wird traditionell über Telefonnetze mit Hilfe von der Zeitmultiplextechnik abgewickelt. Man spricht in diesem Zusammenhang häufig auch von TDM (time division multiplexing) Netzen. Mit der Verlegung von Netzen mit hoher Bandbreite bzw. Übertragungskapazität ist neben der Daten- und Sprachübertragung auch die Realisierung von Bildbezogenen Diensten in den Bereich des Machbaren gerückt. Übertragung von Videoinformationen in Echtzeit, z.B. im Rahmen von Video-on-demand Diensten oder Videokonferenzen, wird eine wichtige Kategorie von Diensten zukünftiger Netze sein.

Die Entwicklung zielt dahin, möglichst alle Dienste, datenbezogene, sprachbezogene und auf Videoinformationen bezogene, über ein paketorientiertes Netz durchführen zu können. Für die verschiedenen Anforderung bei der Datenübertragung im Rahmen der verschiedenen Dienste definiert man üblicherweise Dienstklassen. Die Übertragung mit einer definierten Dienstqualität (quality of service) vor allem bei Diensten mit Echtzeitanforderungen verlangt eine entsprechende Steuerung bzw. Kontrolle.für die Paketübertragung über das Netz. Im Englischen gibt es eine Reihe von Begriffen die sich auf die Kontrolle bzw. Steuerung des Verkehrs beziehen: traffic management, traffic conditioning, traffic shaping, traffic engineering, policing ect. Verschiedene Vorgehensweisen für eine Kontrolle bzw. Steuerung für den Verkehr eines paketorientierten Netzes sind in der einschlägigen Literatur beschrieben.

Bei ATM (asynchroneous transfer mode) Netzen wird für jede Datenübertragung auf der gesamten Übertragungsstrecke eine Reservierung vorgenommen. Durch die Reservierung wird das Verkehrsaufkommen beschränkt. Zur Überwachung findet abschnittsweise eine Überlastkontrolle statt. Eine eventuelle Verwerfung von Paketen wird nach Maßgabe des CLP-Bits (CLP: Cell loss priority) des Paketheaders vorgenommen.

Das Diff-Serv Konzept wird bei IP (internet protocol) Netzen angewendet und zielt auf eine bessere Dienstqualität für Dienste mit hohen Qualitätsanforderungen durch Einführung von Dienstklassen. Man spricht in diesem Zusammenhang auch häufig von einem CoS (class of service) Modell. Das Diff-Serv Konzept ist in den von der IETF veröffentlichten RFCs mit den Nummern 2474 und 2475 beschrieben. Im Rahmen des Diff-Serv Konzepts wird mit Hilfe eines DS (Differentiated Services) Feldes im IP Header der Datenpakete durch Setzen des DSCP (DS codepoint) Parameters eine Priorisierung des Paketverkehrs vorgenommen. Diese Priorisierung erfolgt mit Hilfe einer "per hop" Ressourcenallokation, d.h. die Pakete erfahren bei den Knoten je nach der im DS Feld durch den DSCP Parameter festgelegten Dienstklasse (class of service) eine unterschiedliche Behandlung. Die Kontrolle bzw. Steuerung des Verkehrs wird also nach Maßgabe von den Dienstklassen vorgenommen. Das Diff-Serv Konzept führt zu einer privilegierten Behandlung von dem Verkehr priorisierter Dienstklassen, nicht jedoch zu einer zuverlässigen Kontrolle des Verkehrsvolumens.

Ein anderer Ansatz für im Hinblick auf eine quality of service Übertragung über IP Netze ist durch das RSVP (resource reservation protocol) gegeben. Bei diesem Protokoll handelt es sich um ein Reservierungsprotokoll, mit dessen Hilfe eine Bandbreitenreservierung entlang eines Pfades vorgenommen wird. Über diesen Pfad kann dann eine quality of service (QoS) Übertragung stattfinden. Das RSVP Protokoll wird zusammen mit dem MPLS (multi protocol label switching) Protokol eingesetzt, das virtuelle Pfade über IP Netze ermöglicht. Für eine Garantie der QoS Übertragung wird in der Regel entlang des Pfades das Verkehrsaufkommen kontrolliert und gegebenenfalls beschränkt. Durch die Einführung von Pfaden verliert man jedoch viel von der ursprünglichen Flexibilität von IP Netzen.

Zentral für Garantien von Übertragungsqualitätsparametern ist eine effiziente Kontrolle des Verkehrs. Bei einer Kontrolle des Verkehrsaufkommen im Rahmen von Datenübertragung über paketorientierte Netze ist zudem auf eine hohe Flexibilität und geringe Komplexität bei der Datenübertragung zu achten, wie sie z.B. IP Netze in hohem Maße aufweisen. Diese Flexibilität bzw. geringe Komplexität geht bei der Verwendung des RSVP Protokolls mit einer Ende-zu-Ende Pfadreservierung jedoch zu einem großen Teil wieder verloren. Andere Verfahren wie Diff-Serv führen zu keinen garantierten Dienstklassen.

WO 01/54448 A offenbart die Verwendung von knoten- und routenbezogenen Bandbreitelimits für eine Zugangskontrolle am Netzeingang. Knotenbezogene Bandbreitelimits am Netzeingang können die verfügbare Bandbreite nur sehr unvollständig nutzen, da das fehlende Wissen über das Ziel des Verkehrs durch entsprechend große Reservenvorhaltungen kompensiert werden muß. Routenbezogene Verfahren bedingen den Aufwand und die mangelnde Flexibilität der pfadbezogenen Ansätze.

Breslau et al: "Endpoint Admission Control: Architectural Issues and Performance", Proceedings of ACM SIGCOMM, XX, XX, 28 August 2000 (2000-08-28), pages 57-69, XP002152149, analysieren Verfahren, bei denen vor dem Aufbau einer Verbindung vom Eingang aus ein Messverkehr ins Netz geschickt und anhand der dabei erzielten Dienstqualität über die Zulassung entschieden wird. Die Prozedur ist aufwändig, langwierig und wenig zuverlässig, da sie z.B. auf Veränderungen des Routings während der Verbindungsdauer nicht reagieren kann.

Die Erfindung hat zur Aufgabe, eine effiziente Verkehrskontrolle für ein paketorientiertes Netz anzugeben, das die Nachteile herkömmlicher Verfahren vermeidet.

Die Aufgabe wird durch ein Verfahren zur Verkehrsbegrenzung in einem paketorientierten Netz nach Anspruch 1 gelöst.

Im Rahmen des erfindungsgemäßen Verfahren wird für eine Gruppe von über das Netz zu übertragenden Datenpaketen eines Flows eine Zulässigkeitsprüfung durchgeführt. Die Zulässigkeitsprüfung wird mit Hilfe eines Grenzwertes für das Verkehrsaufkommen zwischen dem Netzeingangsknoten und dem Netzausgangsknoten des Flows vorgenommen. Die Übertragung der Gruppe von Datenpaketen wird nicht zugelassen, wenn ein Zulassen der Übertragung zu einem den Grenzwert überschreitenden Verkehrsaufkommen führen würde.

Bei dem paketorientiertem Netz kann es sich auch um ein Teilnetz oder Subnetz handeln. In IP (Internet Protocol) Systemen gibt es z.B. Netzarchitekturen, bei denen das Gesamtnetz in "autonome Systeme" bzw. "autonomous system" genannte Netze unterteilt ist. Das erfindungsgemäße Netz kann z.B. ein autonomes System oder der Teil des Gesamtnetzes im Zuständigkeitsbereich eines Dienstanbieters (z.B. ISP: internet service provider) sein. Im Falle eines Teilnetzes können über eine Verkehrskontrolle in den Teilnetzen und eine effiziente Kommunikation zwischen den Teilnetzen Dienstparameter für eine Übertragung über das Gesamtnetz festgelegt werden.

Der Begriff "Flow" wird üblicherweise verwendet, um den Verkehr zwischen einer Quelle und einem Ziel zu bezeichnen. Hier bezieht sich Flow auf den Eingangsknoten und den Ausgangsknoten des paketorientierten Netzes, d.h. alle Pakete eines Flows im Sinne unseres Sprachgebrauchs werden über den selben Eingangsknoten und denselben Ausgangsknoten übertragen. Die Gruppe von Paketen ist beispielsweise einer Verbindung (bei einer TCP/IP Übertragung definiert durch IP Adresse und Portnummer von Ausgangs- und Zielprozess) und/oder einer Dienstklasse zugeordnet.

Eingangsknoten des paketorientierten Netzes sind Knoten, über die Pakete in das Netz geleitet werden; Ausgangsknoten sind Knoten des Netzes, über die Pakete das Netz verlassen. In der englischsprachigen Literatur spricht man häufig von ingress nodes und egress nodes. Beispielsweise kann ein Netz gegeben sein, das Randknoten und innere Knoten umfasst. Wenn z.B. über alle Randknoten des Netzes Pakete in das Netz gelangen oder das Netz verlassen können, wären in diesem Falle die Randknoten des Netzes sowohl Netzeingangsknoten sowie Netzausgangsknoten.

Ein erfindungsgemäßer Zulässigkeitstest kann durch eine Kontrollinstanz in einem Knoten oder den Knoten vorgeschalteten Rechnern durchgeführt werden. Eine Kontrollinstanz kann dabei für mehrere Knoten Kontrollfunktionen übernehmen.

Durch die erfindungsgemäße Zulässigkeitsprüfung wird das Verkehrsaufkommen zwischen einem Netzeingangsknoten und einem Netzausgangsknoten kontrolliert. Es kann verhindert werden, dass zwischen den beiden Knoten ein Verkehrsaufkommen erwächst, das zu einer Überlast im Netz und damit zu Verzögerungen und Paketverwerfungen führen würde. Die Beschränkung des Verkehrsaufkommen kann im Sinne einer Übertragung mit ausgehandelten Dienstqualitätsmerkmalen (SLA: service level agreements) vorgenommen werden, z.B. nach Maßgabe der Priorisierung des Verkehrs.

Für eine Garantie für Dienste mit QoS Datenübertragung kann es wichtig sein, das gesamte Verkehrsaufkommen innerhalb des Netzes zu kontrollieren. Dieses Ziel kann erreicht werden, indem für alle Paare von Netzeingangsknoten und Netzausgangsknoten Grenzwerte für das Verkehrsaufkommen zwischen dem jeweiligen Knotenpaar festgesetzt werden. Die Grenzwerte für das Verkehrsaufkommen zwischen Paaren von Netzeingangsknoten und Netzausgangsknoten können mit Werten für das maximale Verkehrsaufkommen auf Teilstrecken (häufig auch Links genannt) in Relation gesetzt werden. Der maximale Wert für das Verkehrsaufkommen auf Teilstrecken wird sich dabei im Allgemeinen nicht nur nach der Bandbreite, sondern auch nach der verwendeten Netzwerktechnologie richten. Z.B. wird in der Regel zu berücksichtigen sein, ob es sich um ein LAN (Local area Network), ein MAN (Metropolitan Area network), ein WAN (Wide Area network) bzw. ein Backbone-Netzwerk handelt. Andere Parameter als die Übertragungskapazität, wie z.B. Verzögerungen bei der Übertragung, müssen z.B. für Netze für Echtzeitanwendungen mitberücksichtigt werden. Beispielsweise ist ein Auslastungsgrad nahe bei 100% für LAN mit CSMA/CD (Carrier Sense Multiple Access (with) Collision Detection) mit Verzögerungen verbunden, die Echtzeit-Anwendungen in der Regel ausschließen. Aus den maximalen Werten für das maximale Verkehrsaufkommen auf Teilstrecken lassen sich dann die Grenzwerte für das Verkehrsaufkommen zwischen Paaren von Netzeingangsknoten und Netzausgangsknoten festlegen. Diese Relation basiert in der bevorzugten Ausgestaltung auf dem für die Paare von Netzeingangsknoten und Netzausgangsknoten anteilsmäßigen Verkehrsaufkommen über die einzelnen Teilstrecken des Netzes. Die für die Paare von Netzeingangsknoten und Netzausgangsknoten anteilsmäßigen Verkehrsaufkommen über die einzelnen Teilstrecken des Netzes können anhand von Erfahrenswerten oder bekannten Eigenschaften von Knoten und Links ermittelt werden. Möglich ist auch, das Netz auszumessen, um diese die anteilsmäßigen Verkehrsaufkommen über die einzelnen Teilstrecken in Abhängigkeit von Netzeingangsknoten und Netzausgangsknoten zu erhalten. In der Verkehrstheorie spricht man in diesem Zusammenhang von der Verkehrsmatrix.

Die Erfindung hat den Vorteil, dass Informationen für die Zugangskontrolle nur bei Eingangsknoten vorgehalten werden müssen. Diese Informationen umfassen für einen Eingangsknoten z.B. die Grenzwerte und aktuellen Werte für die Verkehrsaufkommen zwischen dem Eingangsknoten und den verschiedenen Ausgangsknoten. Der Umfang der Informationen ist beschränkt. Die Aktualisierung des Verkehrsaufkommen wenig aufwändig. Die inneren Knoten brauchen hinsichtlich der Zulässigkeitskontrolle keine Funktionen übernehmen. Das Verfahren ist somit erheblich aufwandsärmer und hat einen niedrigeren Komplexitätsgrad als Verfahren, die für einzelne Teilstrecken Zulässigkeitskontrollen vorsehen. Im Gegensatz zu herkömmlichen Verfahren wie ATM oder MPLS braucht innerhalb des Netzes kein Pfad reserviert zu werden.

In einer Variante des erfindungsgemäßen Verfahrens werden zusätzlich zwei weitere Zulässigkeitsprüfungen durchgeführt, wobei eine dieser Zulässigkeitsprüfungen mit Hilfe eines Grenzwertes für den über den Netzeingangsknoten des Flows geleiteten Verkehr und die andere mit Hilfe eines Grenzwertes für den über den Netzausgangsknoten des Flows geleiteten Verkehr durchgeführt wird. Die Zulässigkeitsprüfung mit Hilfe eines Grenzwertes für den über den Netzausgangsknoten des Flows geleiteten Verkehr kann z.B. bei dem entsprechenden Ausgangsknoten vorgenommen werden. Die Kontrollinstanzen für die einzelnen Zulässigkeitsprüfungen kommunizieren dann miteinander, um mit Hilfe der Ergebnisse der einzelnen Zulässigkeitsprüfungen eine Entscheidung bezüglich der Übertragung der Gruppe von Datenpaketen herbeizuführen.

Im Rahmen dieser Variante kann ein Zusammenhang zwischen den Verkehrsaufkommen zwischen Paaren von Netzeingangsknoten und Netzausgangsknoten und dem Verkehrsaufkommen auf Teilstrecken des Netzes hergestellt werden. Mittels der Werte für ein maximales Verkehrsaufkommen auf den Teilstrecken des Netzes können Grenzen für das Verkehrsaufkommen zwischen den Paaren von Netzeingangsknoten und Netzausgangsknoten sowie Grenzwerte für den über die Netzeingangsknoten geleiteten Verkehr und über die Netzausgangsknoten geleiteten Verkehr bestimmt werden.

Der Zusammenhang zwischen den Verkehrsaufkommen zwischen Paaren von Netzeingangsknoten und Netzausgangsknoten und dem Verkehrsaufkommen auf Teilstrecken des Netzes kann als Optimierungsproblem mit Randbedingungen bzw. Nebenbedingungen in Form von Ungleichungen hergestellt werden. Dabei fließt das anteilsmäßige Verkehrsaufkommen über die einzelnen Teilstrecken des Netzes zur Formulierung des Zusammenhangs zwischen den Verkehrsaufkommen zwischen Paaren von Netzeingangsknoten und Netzausgangsknoten und dem Verkehrsaufkommen auf Teilstrecken des Netzes ein.

Diese Formulierung erlaubt zusätzlich, weitere Kriterien in Form von Ungleichungen in die Bestimmung der Grenzen bzw. Grenzwerte für die Zulässigkeitsprüfungen aufzunehmen. Es können z.B. bei der Bestimmung von Grenzen bzw. Grenzwerten für die Zulässigkeitsprüfungen Bedingungen in Form von Ungleichungen aufgenommen werden, die ein geringes Verkehrsaufkommen von hochpriorisierten Verkehr auf Teilstrecken mit größeren Verzögerungszeiten bedingen. Ein anderes Beispiel ist das eines Ausgangsknoten, über den Pakete zu mehreren Eingangsknoten von anderen Netzen übertragen werden können, d.h. der Ausgangsknoten hat Schnittstellen zu mehreren anderen Netzen. Wenn Eingangsknoten eines der nachfolgenden Netze ein geringeres Datenvolumen als der Ausgangsknoten bearbeiten kann, kann durch eine weitere Nebenbedingung in Form einer Ungleichung sicher gestellt werden, dass der über den Ausgangsknoten zu dem Eingangsknoten geleitete Verkehr dessen Kapazität übersteigt.

Entsprechend einer Weiterbildung der Erfindung werden bei Ausfall einer Teilstrecke die Grenzen bzw. Grenzwerte für die Zulässigkeitsprüfung bzw. die Zulässigkeitsprüfungen neu mit der Bedingung festgesetzt werden, dass über die ausgefallene Teilstrecke keine Pakete übertragen werden. Durch die erneute Festsetzung der Grenzen wird erreicht, dass über andere Links der Verkehr geleitet wird, der sonst über den ausgefallenen Link übertragen worden wäre, ohne dass es zu einer Überlast durch den umgeleiteten Verkehr käme. Es kann so flexibel auf Ausfälle reagiert werden.

Ein vorsorglicher Schutz gegen Linkausfälle kann durch die Wahl der Grenzwerte bzw. Grenzen gewährleistet werden. Dabei werden für eine Mehrzahl von möglichen Störfällen jeweils Grenzen bzw. Grenzwerte bestimmt, bei denen das Verkehrsaufkommen auch im Störfall in einem zulässiger Rahmen bleibt, d.h. Parameter wie Laufzeitverzögerung und Paketverlustrate in durch die Qualitätsanforderungen für die Datenübertragung definierten Bereichen bleiben. Die Grenzen bzw. Grenzwerte werden dann auf das Minimum der Werte für die untersuchten Störfälle gesetzt. D.h. jeder der Störfälle ist durch die Wahl der Grenzen bzw. Grenzwerte abgefangen. Die Mehrzahl der Störfälle kann z.B. alle Ausfälle von Links umfassen.

Die genannten Zulässigkeitsprüfungen lassen sich auch in Abhängigkeit der Dienstklasse durchführen. Es ist beispielsweise denkbar, eine niedrig priorisierte Dienstklasse zu haben, bei der man Verzögerungen oder den Verwurf von Paketen in Kauf nimmt, wenn die Auslastung des Netzes hoch ist. Dagegen würden für hoch priorisierten Verkehr die Grenzen so gewählt werden, dass Garantien bezüglich Übertragungsqualitätsparameter übernommen werden können.

Die Erfindung wird im folgenden anhand einer Figur im Rahmen eines Ausführungsbeispiels näher erläutert.

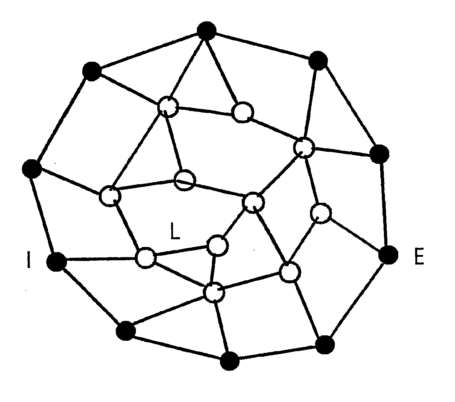

Die Figur zeigt ein erfindungsgemäßes Netz. Randknoten sind durch gefüllte Kreise, innere Knoten durch nicht gefüllte Kreise gekennzeichnet. Links sind durch Verbindungen zwischen den Knoten dargestellt. Exemplarisch ist ein Eingangsknoten mit I, ein Ausgangsknoten mit E und ein Link mit L bezeichnet. Über den Link L wird ein Teil des Verkehrs zwischen den Knoten I und E übertragen. Die Zulässigkeitsprüfungen bei dem Eingangsknoten I und evtl. bei dem Ausgangsknoten E stellen zusammen mit den anderen Zulässigkeitsprüfungen sicher, dass keine Überlast bei dem Link L auftritt.

Im folgenden werden mathematische Relationen bzw. Zusammenhänge für das erfindungsgemäße Verfahren dargestellt. In der Praxis werden in der Regel Grenzen bzw. Grenzwerte in Abhängigkeit der maximalen Linkkapazitäten festgesetzt. Ob der einfacheren mathematischen Darstellung wird im folgenden der umgekehrte Fall betrachtet, d.h. in Abhängigkeit der Grenzen bzw. Grenzwerte die Dimensionierung der Links berechnet. Die Lösung des umgekehrten Problems kann dann mit numerischen Methoden erfolgen.

Für die folgende detailliertere Darstellung werden folgende Größen eingeführt:

BBB(i,j): die Grenze für das Verkehrsaufkommen zwischen dem Eingangsknoten i und dem Ausgangsknoten j c (L): das Verkehrsaufkommen auf dem Netzabschnitt (Link) L aV(i,j,L): das anteilsmäßige Verkehrsaufkommen über den Link L des gesamten Verkehrsaufkommens zwischen dem Eingangsknoten i und dem Ausgangsknoten j

Für jeden Link L gilt:

$$C(L) = \sum BBB(i,j) \cdot aV(i,j,L), \qquad (1)$$

wobei die Summe über alle Netzeingangsknoten i und Netzausgangsknoten j läuft. Dies gilt unter der Annahme, dass keine Pakete des Netzes im Kreis geleitet werden. D.h. die Übertragung innerhalb des Netzes sei schleifenfrei. Durch die Gleichung (1) ist eine Relation hergestellt, durch die Parameter c(L) mit den Grenzen BBB(i,j) in Relation gesetzt werden.

Für die Ausgestaltung mit zwei zusätzlichen Zulässigkeitsprüfungen lässt sich folgender mathematischer Zusammenhang formulieren. Es gelten die obigen Definitionen. Zudem sei

Ingress(i): Der Grenzwert für den Verkehr über den Netzeingangsknoten i,
Egress(j): Der Grenzwert für den Verkehr über den Ausgangsknoten j,
$\delta$(i,j): Das Verkehrsaufkommen zwischen dem Netzeingangsknoten i und dem Netzausgangsknoten j.

Es lassen sich nun folgende Ungleichungen formulieren:

Für alle i gilt

$$\sum \delta(i,j) \leq Ingress(i), \text{ Summe über alle } j. \qquad (2)$$

Für alle j gilt

$$\sum \delta(i,j) \leq Egress(j), \text{ Summe über alle } i. \qquad (3)$$

Für alle 2-Tupel (i,j) gilt

$$\delta(i,j) \leq BBB(i,j). \qquad (4)$$

Für alle Links L gilt:

$$c(L) = \sum \delta(i,j) \cdot aV(i,j,L), \text{ Summe über alle } i \text{ und } j. \qquad (5)$$

Mit Hilfe des Simplex-Algorithmus können für vorgegebene Werte von Ingress(i), Egress(j) und BBB(i,j) die maximalen c(L) berechnet werden, die die Ungleichungen (2) bis (4) erfüllen. Anders herum kann für einen Satz Grenzen bzw. Grenzwerte Ingress(i), Egress(j) und BBB(i,j) überprüft werden, ob auf einem Link L eine unzulässig hohe Last auftreten kann. Eine der zu hohen Last entgegenwirkende Änderung der Grenzen bzw. Grenzwerte kann in diesem Fall vorgenommen werden.

Das erfinderische Verfahren lässt auf einfache Weise zu, durch Änderung der Grenzen bzw. Grenzwerte auf Störungen zu reagieren. So kann bei dem Ausfall eines Links L die Relation bzw. der Zusammenhang diesen Link ausklammern (z.B. durch Nullsetzen aller aV(i,j,L) für diesen Link L). Durch die neue Formulierung der Relation bzw. des Zusammenhangs können abgeänderte Grenzen bzw. Grenzwerte ermittelt werden, die als Zulässigkeitskriterien Überlast innerhalb des Netzes verhindern.

**Patentansprüche**

1. Verfahren zur Verkehrsbegrenzung in einem paketorientierten Netz mit einer Mehrzahl von Teilstrecken (L), bei dem für eine Gruppe von über das Netz zu übertragenden Datenpaketen eines Flows eine Zulässigkeitsprüfung durchgeführt wird,
**dadurch gekennzeichnet, dass**

   - die Zulässigkeitsprüfung mit Hilfe eines Grenzwertes (BBB(i,j)) für das Verkehrsaufkommen ($\delta(i,j)$) zwischen dem Netzeingangsknoten (I) und dem Netzausgangsknoten (E) des Flows durchgeführt wird, und
   - die Übertragung der Gruppe von Datenpaketen nicht zugelassen wird, wenn ein Zulassen der Übertragung zu einem den Grenzwert (BBB(i,j)) überschreitenden Verkehrsaufkommen ($\delta(i,j)$) führen würde.

2. Verfahren nach Anspruch 1,
**dadurch gekennzeichnet,**

   - **dass** für alle Paare ((i,j)) von Netzeingangsknoten und Netzausgangsknoten Grenzwerte (BBB(i,j)) für das Verkehrsaufkommen ($\delta(i,j)$) zwischen dem jeweiligen Knotenpaar ((i,j)) festgesetzt werden.

3. Verfahren nach Anspruch 2,
**dadurch gekennzeichnet,**

   - **dass** die Grenzwerte (BBB(i,j)) für das Verkehrsaufkommen ($\delta(i,j)$) zwischen Paaren ((i,j)) von Netzeingangsknoten und Netzausgangsknoten mit dem Verkehrsaufkommen (c(L)) auf Teilstrecken (L) des Netzes in Relation gesetzt werden, und
   - **dass** mittels Werten für maximale Verkehrsaufkommen (c(L)) auf den Teilstrecken (L) des Netzes die Grenzwerte (BBB(i,j)) für das Verkehrsaufkommen ($\delta(i,j)$) zwischen Netzeingangsknoten und Netzausgangsknoten festgesetzt werden.

4. Verfahren nach Anspruch 3,
**dadurch gekennzeichnet,**

   - **dass** für die Paare ((i,j)) von Netzeingangsknoten und Netzausgangsknoten das anteilsmäßige Verkehrsaufkommen (aV(i,j,L)) über die einzelnen Teilstrecken (L) des Netzes ermittelt wird, und
   - **dass** die Grenzwerte (BBB(i,j)) für das Verkehrsaufkommen ($\delta(i,j)$) zwischen Paaren ((i,j)) von Netzeingangsknoten und Netzausgangsknoten mit dem Verkehrsaufkommen (c(L)) auf Teilstrecken (L) des Netzes mit Hilfe der Werte für das anteilsmäßige Verkehrsaufkommen (aV(i,j,L)) über die einzelnen Teilstrecken (L) in Relation gesetzt werden.

5. Verfahren nach Anspruch 1,
**dadurch gekennzeichnet,**
**dass** zusätzlich zwei weitere Zulässigkeitsprüfungen durchgeführt werden, wobei eine dieser Zulässigkeitsprüfungen mit Hilfe eines Grenzwertes (Ingress(i)) für den über den Netzeingangsknoten (I) des Flows geleiteten Verkehr und die andere mit Hilfe eines Grenzwertes (Egress(j)) für den über den Netzausgangsknoten (E) des Flows geleiteten Verkehr durchgeführt wird.

6. Verfahren nach Anspruch 5,

**dadurch gekennzeichnet,**

- **dass** ein Zusammenhang zwischen den Verkehrsaufkommen ($\delta(i,j)$) zwischen Paaren ($(i,j)$) von Netzeingangsknoten und Netzausgangsknoten und dem Verkehrsaufkommen ($c(L)$) auf Teilstrecken ($L$) des Netzes hergestellt wird, und
- **dass** mittels Werten für ein maximales Verkehrsaufkommen auf den Teilstrecken des Netzes Grenzen (BBB$(i,j)$) für das Verkehrsaufkommen zwischen den Paaren von Netzeingangsknoten und Netzausgangsknoten sowie Grenzwerte (Ingress$(i)$, Egress$(j)$) für den über die Netzeingangsknoten geleiteten Verkehr und über die Netzausgangsknoten geleiteten Verkehr festgesetzt werden.

7. Verfahren nach Anspruch 6,
**dadurch gekennzeichnet,**

- **dass** ein Optimierungsverfahren für das Verkehrsaufkommen ($c(L)$) auf Teilstrecken ($L$) des Netzes durchgeführt wird, wobei

-- die Grenzwerte für das Verkehrsaufkommen zwischen den Paaren von Netzeingangsknoten und Netzausgangsknoten (BBB$(i,j)$) sowie für den über die Netzeingangsknoten geleiteten Verkehr und über die Netzausgangsknoten geleiteten Verkehr (Ingress$(i)$, Egress$(j)$) als Nebenbedingungen für die Optimierung verwendet werden, und
-- das anteilsmäßige Verkehrsaufkommen (aV$(i,j,L)$) über die einzelnen Teilstrecken ($L$) des Netzes zur Formulierung des Zusammenhangs zwischen den Verkehrsaufkommen ($\delta(i,j)$) zwischen Paaren von Netzeingangsknoten und Netzausgangsknoten und dem Verkehrsaufkommen ($c(L)$) auf Teilstrecken ($L$) des Netzes verwendet wird.

8. Verfahren nach einem der vorhergehende Ansprüche, **dadurch gekennzeichnet,**
**dass** bei Ausfall einer Teilstrecke ($L$) die Grenzen (Ingress$(i)$, Egress$(j)$) bzw. Grenzwerte (BBB$(i,j)$) für die Zulässigkeitsprüfung bzw. die Zulässigkeitsprüfungen neu mit der Bedingung festgesetzt werden, dass über die ausgefallene Teilstrecke ($L$) keine Pakete übertragen werden.

9. Verfahren nach einem der vorhergehenden Ansprüche,
**dadurch gekennzeichnet,**
**dass** für zumindest eine Zulässigkeitsprüfung von der Dienstklasse der Gruppe von Paketen abhängige Grenzen (Ingress$(i)$, Egress$(j)$) bzw. Grenzwerte (BBB$(i,j)$) verwendet werden.

10. Verfahren nach einem der vorhergehenden Ansprüche,
**dadurch gekennzeichnet,**

- **dass** für eine Mehrzahl von möglichen Störfällen jeweils Grenzen bzw. Grenzwerte bestimmt werden, bei denen das Verkehrsaufkommen auch im Störfall in einem zulässigen Rahmen bleibt, und
- **dass** die Grenzen bzw. Grenzwerte auf das Minimum der Werte für die untersuchten Störfälle gesetzt werden.

**Claims**

1. Method for limiting traffic in a packet-oriented network with a plurality of links ($L$), in which an admissibility check is performed for a group of data packets of a flow which are to be transmitted via the network,
**characterized in that**

- the admissibility check is performed using a threshold value (BBB$(i,j)$) for the volume of traffic ($\delta(i,j)$) between the network ingress node ($I$) and the network egress node ($E$) of the flow, and
- the transmission of the group of data packets is not admitted if admission of the transmission would result in a volume of traffic ($\delta(i,j)$) which exceeds the threshold value (BBB$(i,j)$).

2. Method according to Claim 1,
**characterized**

- **in that** threshold values (BBB$(i,j)$) for the volume of traffic ($\delta(i,j)$) between the respective node pair ($(i,j)$) are fixed for all pairs ((i,j)) of network ingress nodes and network egress nodes.

3. Method according to Claim 2,
   **characterized**

   - **in that** the threshold values (BBB(i,j)) for the volume of traffic ($\delta$(i,j)) between pairs ((i,j)) of network ingress nodes and network egress nodes are related to the volume of traffic (c(L)) on links (L) of the network, and
   - **in that** values for maximum volumes of traffic (c(L)) on the links (L) of the network are used to constitute the threshold values (BBB(i,j)) for the volume of traffic ($\delta$(i,j)) between network ingress nodes and network egress nodes.

4. Method according to Claim 3,
   **characterized**

   - **in that** for the pairs ((i,j)) of network ingress nodes and network egress nodes the proportionate volume of traffic (aV(i,j,L)) via the individual subsections (L) of the network is determined, and
   - **in that** the limit values (BBB(i,j)) for the volume of traffic ($\delta$(i,j)) between pairs ((i,j)) of network ingress nodes and network egress nodes are related to the volume of traffic (c(L)) on links (L) of the network using the values for the proportionate volume of traffic (aV(i,j,L)) via the individual links (L).

5. Method according to Claim 1,
   **characterized**

   - **in that** additionally two further admissibility checks are performed, wherein one of said admissibility checks is performed using a threshold value (Ingress(i)) for the traffic routed via the network ingress node (I) of the flow and the other is performed using a threshold value (Egress(j)) for the traffic routed via the network egress node (E) of the flow.

6. Method according to Claim 5,
   **characterized**

   - **in that** a correlation is produced between the volumes of traffic ($\delta$(i,j)) between pairs ((i,j)) of network ingress nodes and network egress nodes and the volume of traffic (c(L)) on links (L) of the network, and
   - **in that** values for a maximum volume of traffic on the links of the network are used to constitute threshold values (BBB(i,j)) for the volume of traffic between the pairs of network ingress nodes and network egress nodes and also threshold values (Ingress(i), Egress(j)) for the traffic routed via the network ingress nodes and traffic routed via the network egress nodes.

7. Method according to Claim 6,
   **characterized**

   - **in that** an optimization method is performed for the volume of traffic (c(L)) on links (L) of the network, wherein

     -- the threshold values for the volume of traffic between the pairs of network ingress nodes and network egress nodes (BBB(i,j)) and for the traffic routed via the network ingress nodes and traffic routed via the network egress nodes (Ingress(i), Egress(j)) are used as secondary conditions for the optimization, and
     -- the proportionate volume of traffic (aV(i,j,L)) via the individual links (L) of the network is used for expressing the correlation between the volumes of traffic ($\delta$(i,j)) between pairs of network ingress nodes and network egress nodes and the volume of traffic (c(L)) on links (L) of the network.

8. Method according to any of the preceding claims, **characterized**

   - **in that** failure of a link (L) prompts the thresholds (Ingress(i), Egress(j)) and threshold values (BBB(i,j)) for the admissibility check and the admissibility checks, respectively, to be constituted anew with the condition that no packets are transmitted via the failed link (L).

9. Method according to any of the preceding claims, **characterized**

- **in that** thresholds (Ingress(i), Egress(j)) and threshold values (BBB(i,j)) which are dependent on the service class of the group of packets are used for at least one admissibility check.

10. Method according to any of the preceding claims, **characterized**

- **in that** respective thresholds and threshold values are determined for a plurality of possible failure conditions, for which thresholds and threshold values the volume of traffic even in the event of the respective failure condition remains within admissible boundaries, and
- **in that** the thresholds and threshold values are set to the minimum of the values seen for the examined failure conditions.


**Revendications**

1. Procédé pour limiter le trafic dans un réseau orienté paquets avec une pluralité de tronçons (L), dans lequel un contrôle d'admissibilité est effectué pour un groupe de paquets de données d'un flux à transmettre sur le réseau, **caractérisé en ce que**

- le contrôle d'admissibilité est effectué à l'aide d'une valeur limite (BBB(i,j)) du volume de trafic ($\delta$(i,j)) entre le noeud d'entrée au réseau (I) et le noeud de sortie du réseau (E) du flux et
- la transmission du groupe de paquets de données n'est pas autorisée lorsque l'autorisation de transmettre entraînerait un volume de trafic ($\delta$(i,j)) qui dépasse la valeur limite (BBB(i,j)).

2. Procédé selon la revendication 1, **caractérisé en ce que** sont fixées, pour tous les couples ((i,j)) de noeuds d'entrée au réseau et de noeuds de sortie du réseau, des valeurs limites (BBB(i,j)) du volume de trafic ($\delta$(i,j)) entre le couple de noeuds respectif ((i,j)).

3. Procédé selon la revendication 2, **caractérisé en ce que**

- les valeurs limites (BBB(i,j)) du volume de trafic ($\delta$(i,j)) entre des couples ((i,j)) de noeuds d'entrée au réseau et de noeuds de sortie du réseau sont mises en relation avec le volume de trafic (c(L)) sur des tronçons (L) du réseau et
- les valeurs limites (BBB(i,j)) du volume de trafic ($\delta$(i,j)) entre noeuds d'entrée au réseau et noeuds de sortie du réseau sont fixées au moyen de valeurs de volumes de trafic maximaux (c(L)) sur les tronçons (L) du réseau.

4. Procédé selon la revendication 3, **caractérisé en ce que**

- le volume de trafic proportionnel (aV(i,j,L) passant par les différents tronçons (L) du réseau est déterminé pour les couples ((i,j)) de noeuds d'entrée au réseau et de noeuds de sortie du réseau et
- les valeurs limites (BBB(i,j)) du volume de trafic ($\delta$(i,j)) entre des couples ((i,j)) de noeuds d'entrée au réseau et de noeuds de sortie du réseau sont mises en relation avec le volume de trafic (c(L)) sur des tronçons (L) du réseau à l'aide des valeurs du volume de trafic proportionnel (aV(i,j,L)) passant par les différents tronçons (L).

5. Procédé selon la revendication 1, **caractérisé en ce que** deux autres contrôles d'admissibilité sont effectués additionnellement, l'un de ces contrôles d'admissibilité étant effectué à l'aide d'une valeur limite (Ingress(i)) du trafic passant par le noeud d'entrée au réseau (I) du flux et l'autre, à l'aide d'une valeur limite (Egress(j)) du trafic passant par le noeud de sortie du réseau (E) du flux.

6. Procédé selon la revendication 5, **caractérisé en ce que**

- un lien est établi entre les volumes de trafic ($\delta$(i,j)) entre des couples ((i,j)) de noeuds d'entrée au réseau et de noeuds de sortie du réseau et le volume de trafic (C(L)) sur des tronçons (L) du réseau et
- des limites (BBB(i,j)) du volume de trafic entre les couples de noeuds d'entrée au réseau et de noeuds de sortie du réseau ainsi que des valeurs limites (Ingress(i), Egress(j)) du trafic passant par les noeuds d'entrée au réseau et du trafic passant par les noeuds de sortie du réseau sont fixées au moyen de valeurs d'un volume de trafic maximal sur les tronçons du réseau.

7. Procédé selon la revendication 6, **caractérisé en ce que**

- un procédé d'optimisation du volume de trafic (c(L)) est exécuté sur des tronçons (L) du réseau,

    -- les valeurs limites du volume de trafic entre les couples de noeuds d'entrée au réseau et de noeuds de sortie du réseau (BBB(i,j)) ainsi que du trafic passant par les noeuds d'entrée au réseau et du trafic passant par les noeuds de sortie du réseau (Ingress(i), Egress(j)) étant utilisées en tant que conditions secondaires pour l'optimisation et

    -- le volume de trafic proportionnel (aV(i,j,L)) passant par les différents tronçons (L) du réseau étant utilisé pour formuler le lien entre les volumes de trafic ($\delta$(i,j)) entre couples de noeuds d'entrée au réseau et de noeuds de sortie du réseau et le volume de trafic (c(L)) sur des tronçons (L) du réseau.

**8.** Procédé selon l'une des revendications précédentes, **caractérisé en ce que**, en cas de défaillance d'un tronçon (L), les limites (Ingress(i), Egress(j)) respectivement les valeurs limites (BBB(i,j)) pour le contrôle d'admissibilité resp. les contrôles d'admissibilité sont refixées avec la condition qu'aucun paquet ne soit transmis sur le tronçon défaillant (L).

**9.** Procédé selon l'une des revendications précédentes, **caractérisé en ce que** sont utilisées, pour au moins un contrôle d'admissibilité, des limites (Ingress(i), Egress(j)) resp. des valeurs limites (BBB(i,j)) qui dépendent de la classe de service du groupe de paquets.

**10.** Procédé selon l'une des revendications précédentes, **caractérisé en ce que**

    - sont déterminées, pour une pluralité de cas de perturbation possibles, respectivement des limites ou valeurs limites pour lesquelles le volume de trafic reste dans un cadre admissible même en cas de perturbation et

    - les limites ou valeurs limites sont fixées au minimum des valeurs pour les cas de perturbation analysés.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0154448 A

**In der Beschreibung aufgeführte Nicht-Patentliteratur**

- **Breslau et al.** Endpoint Admission Control: Architectural Issues and Performance. *Proceedings of ACM SIGCOMM,* 28. August 2000, vol. XX (XX), 57-69